# EUROPEAN PATENT SPECIFICATION

(11) **EP 3 553 278 B1**
(45) Date of publication and mention of the grant of the patent: **03.03.2021**
(21) Application number: 19154300.8
(22) Date of filing: 29.01.2019
(51) Int. Cl.: F01D 9/04

(54) **AXIAL STIFFENING RIBS/AUGMENTATION FINS**
AXIALE VERSTEIFUNGSRIPPEN/VERSTÄRKUNGSRIPPEN
NERVURES DE RENFORT AXIAL/AILETTES D'AUGMENTATION

(30) Priority: 05.04.2018 US 201815946577
(43) Date of publication of application: 16.10.2019
(73) Proprietor: United Technologies Corporation, Farmington, CT 06032 (US)
(72) Inventor: BARKER, William M., North Andover, MA Massachusetts 01845 (US); PAULINO, Jose, Saco, ME Maine 04072 (US)
(74) Representative: Dehns

(56) References cited:
- EP-A1- 3 030 754
- EP-A1- 3 081 759
- US-A1- 2013 115 065
- US-B1- 7 665 962

## Description

### FIELD

The present disclosure is directed to blade outer air seals (BOAS) for use with gas turbine engines.

### BACKGROUND

Gas turbine engines, such as those that power modern commercial and military aircraft, may include a fan section to propel the aircraft, a compressor section to pressurize a supply of air from the fan section, a combustor section to burn fuel in the presence of the pressurized air, and a turbine section to extract energy from the resultant combustion gases and to generate thrust.

The compressor section and turbine section each have multiple stages of rotors that rotate about a central axis and multiple stages of stators that are stationary relative to the central axis. A blade outer air seal is positioned radially outward from the rotors and forms a seal with the rotors to increase efficiency of the corresponding compressor section or turbine section.

A blade outer air seal (BOAS) is known from each of US 2013/115065 A1, EP 3 081 759 A1, US 7665962, and EP 3 030 754 A1.

### SUMMARY

According to a first aspect, there is provided a blade outer air seal (BOAS) as recited in claim 1.

Further, optional, features are recited in each of claims 2 to 5.

According to a second aspect, there is provided a compressor section or a turbine section of a gas turbine engine as recited in claim 6.

Further, optional, features are recited in claim 7.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and nonlimiting.

### BRIEF DESCRIPTION OF THE DRAWINGS

The subject matter of the present disclosure is particularly pointed out and distinctly claimed in the concluding portion of the specification. A more complete understanding of the present disclosure, however, is best be obtained by referring to the detailed description and claims when considered in connection with the drawing figures, wherein like numerals denote like elements.
FIG. 1 is a schematic cross-section of a gas turbine engine, in accordance with various embodiments;
FIG. 2 is an enlarged schematic cross-section of a portion of a high pressure turbine section of the gas turbine engine of FIG. 1, in accordance with various embodiments;
FIG. 3 is a perspective view illustrating a blade outer air seal (BOAS) for use in the high pressure turbine section of FIG. 2, in accordance with various embodiments;
FIG. 4 is a cross-sectional view of the portion of the high pressure turbine section of FIG. 2, in accordance with various embodiments;
FIG. 5A is a heat dissipation diagram illustrating heat dissipation on a blade arrival edge of the BOAS of FIG. 3, in accordance with various embodiments; and
FIG. 5B as a heat dissipation diagram illustrating heat dissipation on a blade departure edge of the BOAS of FIG. 3, in accordance with various embodiments.

### DETAILED DESCRIPTION

The detailed description of exemplary embodiments herein makes reference to the accompanying drawings, which show exemplary embodiments by way of illustration and their best mode. While these exemplary embodiments are described in sufficient detail to enable those skilled in the art to practice the inventions, it should be understood that other embodiments may be realized and that logical, chemical and mechanical changes may be made without departing from the scope of the inventions. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact. Where used herein, the phrase "at least one of A or B" can include any of "A" only, "B" only, or "A and B.

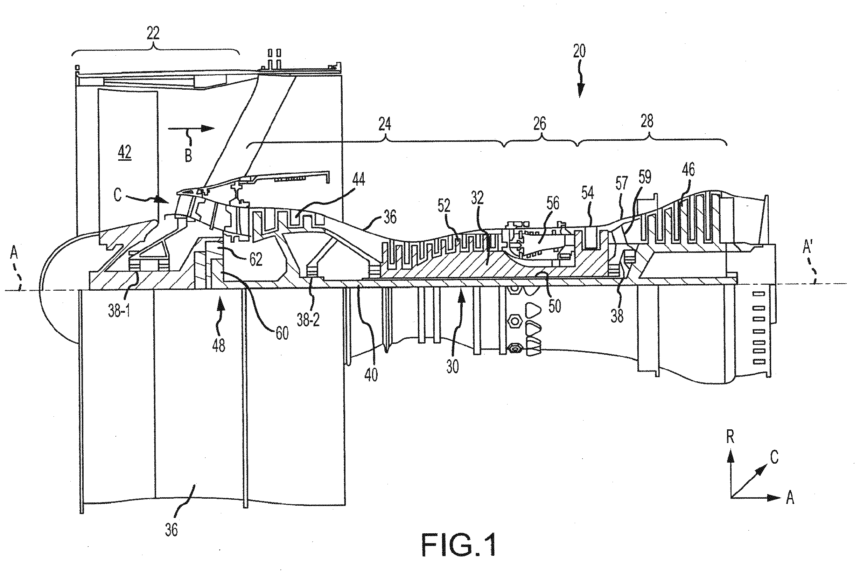

With reference to FIG. 1, a gas turbine engine 20 is provided. As used herein, "aft" refers to the direction associated with the tail (e.g., the back end) of an aircraft, or generally, to the direction of exhaust of the gas turbine engine. As used herein, "forward" refers to the direction associated with the nose (e.g., the front end) of an aircraft, or generally, to the direction of flight or motion. As utilized herein, radially inward refers to the negative R direction (towards axis X-X') and radially outward refers to the R direction (away from the X-X' axis). An A-R-C axis is shown throughout the drawings to illustrate the relative position of various components.

The gas turbine engine 20 may be a two-spool turbofan that generally incorporates a fan section 22, a compressor section 24, a combustor section 26 and a turbine section 28. Alternative engines may include other systems or features. In operation, the fan section 22 drives air along a bypass flow-path B while the compressor section 24 drives air along a core flow-path C for compression and communication into the combustor section 26 then expansion through the turbine section 28. Although depicted as a turbofan gas turbine engine 20 herein, it should be understood that the concepts described herein are not limited to use with turbofans as the teachings may be applied to other types of turbine engines including three-spool architectures and turboshaft or industrial gas turbines with one or more spools.

The gas turbine engine 20 generally comprise a low speed spool 30 and a high speed spool 32 mounted for rotation about an engine central longitudinal axis X-X' relative to an engine static structure 36 via several bearing systems 38, 38-1, and 38-2. It should be understood that various bearing systems 38 at various locations may alternatively or additionally be provided, including for example, the bearing system 38, the bearing system 38-1, and the bearing system 38-2.

The low speed spool 30 generally includes an inner shaft 40 that interconnects a fan 42, a low pressure (or first) compressor section 44 and a low pressure (or second) turbine section 46. The inner shaft 40 is connected to the fan 42 through a geared architecture 48 that can drive the fan shaft 98, and thus the fan 42, at a lower speed than the low speed spool 30. The geared architecture 48 includes a gear assembly 60 enclosed within a gear housing 62. The gear assembly 60 couples the inner shaft 40 to a rotating fan structure.

The high speed spool 32 includes an outer shaft 50 that interconnects a high pressure (or second) compressor section 52 and the high pressure (or first) turbine section 54. A combustor 56 is located between the high pressure compressor 52 and the high pressure turbine 54. A mid-turbine frame 57 of the engine static structure 36 is located generally between the high pressure turbine 54 and the low pressure turbine 46. The mid-turbine frame 57 supports one or more bearing systems 38 in the turbine section 28. The inner shaft 40 and the outer shaft 50 are concentric and rotate via the bearing systems 38 about the engine central longitudinal axis X-X', which is collinear with their longitudinal axes. As used herein, a "high pressure" compressor or turbine experiences a higher pressure than a corresponding "low pressure" compressor or turbine.

The core airflow C is compressed by the low pressure compressor section 44 then the high pressure compressor 52, mixed and burned with fuel in the combustor 56, then expanded over the high pressure turbine 54 and the low pressure turbine 46. The mid-turbine frame 57 includes airfoils 59 which are in the core airflow path. The turbines 46, 54 rotationally drive the respective low speed spool 30 and high speed spool 32 in response to the expansion.

The gas turbine engine 20 is a high-bypass ratio geared aircraft engine. The bypass ratio of the gas turbine engine 20 may be greater than about six (6:1). The bypass ratio of the gas turbine engine 20 may also be greater than ten (10:1). The geared architecture 48 may be an epicyclic gear train, such as a star gear system (sun gear in meshing engagement with a plurality of star gears supported by a carrier and in meshing engagement with a ring gear) or other gear system. The geared architecture 48 may have a gear reduction ratio of greater than about 2.3 and the low pressure turbine 46 may have a pressure ratio that is greater than about five (5). The diameter of the fan 42 may be significantly larger than that of the low pressure compressor section 44, and the low pressure turbine 46 may have a pressure ratio that is greater than about five (5:1). The pressure ratio of the low pressure turbine 46 is measured prior to an inlet of the low pressure turbine 46 as related to the pressure at the outlet of the low pressure turbine 46. It should be understood, however, that the above parameters are exemplary of various embodiments of a suitable geared architecture engine and that the present disclosure contemplates other turbine engines including direct drive turbofans.

The next generation turbofan engines are designed for higher efficiency and use higher pressure ratios and higher temperatures in the high pressure compressor 52 than are conventionally experienced. These higher operating temperatures and pressure ratios create operating environments that cause thermal loads that are higher than the thermal loads conventionally experienced, which may shorten the operational life of current components.

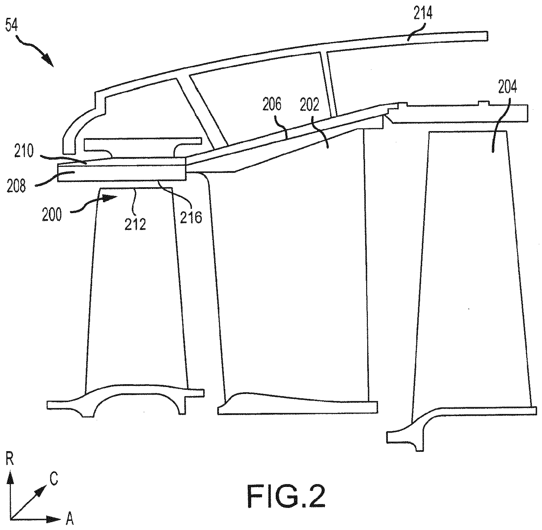

With reference now to FIGS. 1 and 2, a portion of the high pressure turbine section 54 includes a first rotor blade 200, a vane 202, and a second rotor blade 204. The first rotor blade 200 and the second rotor blade 204 are each configured to rotate about the axis A-A' relative to vane 202 in response to receiving a flow of fluid from the combustor section 26. Thus, kinetic energy from the flow is converted to mechanical energy, or torque, by the first rotor blade 200 and the second rotor blade 204. The vane 202 is coupled to a frame 214 of the high pressure turbine 54 and conditions the flow of air between the first rotor blade 200 and the second rotor blade 204. The vane 202 thus acts as a stator and does not rotate relative to the axis A-A'.

A blade outer air seal (BOAS) 208 is located radially outward from the first rotor blade 200. The high pressure turbine section 54 may include multiple BOASs 208 positioned adjacent each other circumferentially and surrounding the longitudinal axis X-X' of FIG. 1. The BOAS 208 is designed to function as a seal to reduce axial air leakage between a tip 212 of the first rotor blade 200 and the frame 214. In particular, the BOAS 208 has an inner surface 216 that forms a seal along with the tip 212 of the first rotor blade 200. In that regard, the core airflow C of FIG. 1 may contact the inner surface 216 of the BOAS 208.

A shroud block 210 (which may also be referred to as a support 210) may be positioned radially outward from the BOAS 208 and may couple the BOAS 208 to the frame 214. The shroud block 210 may resist movement of the BOAS 208 relative to the frame 214. Stated differently, the shroud block 210 may retain the BOAS 208 in place relative to the frame 214.

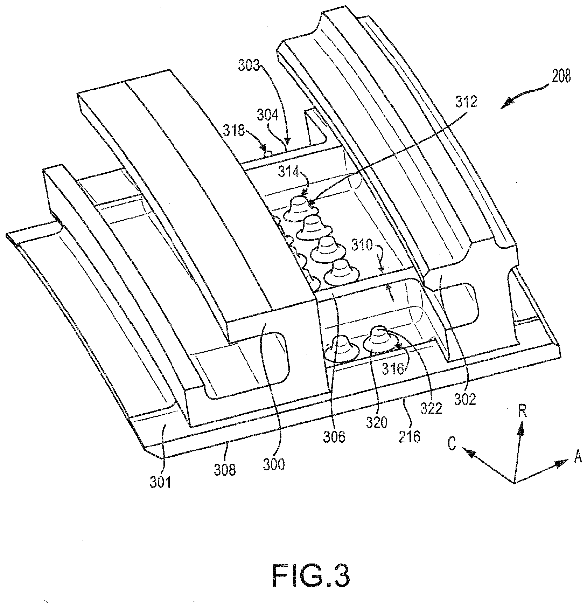

Referring to FIGS. 2 and 3, the inner surface 216 of the BOAS 208 may include an abradable material 308. In response to contact between the tip 212 and the abradable material 308, the abradable material 308 may abrade, forming a seal between the tip 212 and the abradable material 308.

Referring to FIGS. 2, 3, and 4, the BOAS 208 may include a first hook 300 and a second hook 302 each extending radially outward from an outer surface 301 of the BOAS 208. The first hook 300 and the second hook 302 may interface with hooks 400, 402 of the shroud block 210 in order to couple the BOAS 208 to the shroud block 210.

In response to the inner surface 216 being exposed to the hot core airflow, the BOAS 208 may have a tendency to expand axially and circumferentially. The hooks 300, 302 may extend circumferentially along the outer surface 301 of the BOAS 208 and may resist circumferential expansion of the BOAS 208.

The BOAS 208 further includes at least one rib 303 extending axially along the outer surface 301. The BOAS 208 according to the invention includes a first rib 304 anda second rib 306 that each extend axially along the outer surface 301. Each of the plurality of warts 312 has a conical potion 320 that extends outward from the outer surface 301 and morph into a spherical portion 322 that is located radially outward from the conical portion 320. This combination of the conical portion 320 and the spherical portion 322 results in a desirable surface area of each of the plurality of warts 312, thus increasing convection via the warts 312. In various embodiments, the ribs 303 may extend from the first hook 300 to the second hook 302. In various embodiments, the ribs 303 may at least one of extend axially forward of the first hook 300 or axially aft of the second hook 302. The ribs 303 may resist axial expansion of the BOAS 208 in response to the inner surface 216 being exposed to the core airflow C of FIG. 1 because the nature of axial ribs is to stiffen the geometry in the axial direction.

It may be desirable for the BOAS 208 to dissipate heat. In that regard, the ribs 303 may provide additional surface area for convention of heat away from the outer surface 301. The ribs 303 may each have a height 400 in the radial direction and a width 310 in the circumferential direction. In various embodiments, the height 400 may be at least twice as large as the width 310, may be at least 2.5 times as large as the width 310, or may be three times as large as the width 310. This ratio may provide a desirable surface area to achieve desirable convection of heat from the outer surface 301 of the BOAS 208, while providing desirable resistance of axial expansion of the BOAS 208.

In various embodiments, the height 400 may be at least 0.1 inches (2.54 millimeters (mm)), at least 0.12 inches (3.05 mm), or at least 0.15 inches (3.8 mm). For example, the width 310 may be 0.03 inches (0.76 mm), 0.05 inches (1.27 mm), or 0.07 inches (1.8 mm). For example, the height 400 may be 0.114 inches (2.90 mm) and the width 310 may be 0.05 inches (1.27 mm), resulting in a ratio of the height 400 to the width 310 being 2.28.

In various embodiments, the BOAS 208 may further include a plurality of warts 312 extending radially outward from the outer surface 301. The warts 312 may refer to undulations of the outer surface 301. The plurality of warts 312 may provide additional surface area for convection of heat away from the outer surface 301. The plurality of warts 312 may include a first plurality of warts 314 located circumferentially between the first rib 304 and the second rib 306, and a second plurality of warts 316 and a third plurality of warts 318 located circumferentially outward from the first rib 304 and the second rib 306.

In various embodiments, the BOAS 208 (including the hooks 300, 302, the ribs 303, and the plurality of warts 312) may include a steel, a steel alloy, a cobalt, a cobalt alloy, a nickel, a nickel alloy, single-crystal material, or the like. For example, the BOAS 208 may include an austenitic nickel-chromium-based alloy (e.g., an alloy having a nominal composition of nickel fifty-eight percent (58%), chromium 20% to 23%, iron up to 5%, molybdenum between 8% to 10%, niobium (plus tantalum) between 3.15% to 4.15% that is available under the trade name INCONEL 625™, available from Special Metals Corporation of New Hartford, New York, USA). In various embodiments, BOAS 208 may include a high performance nickel-based super alloy (e.g., an alloy having a nominal composition of nickel 58%, chromium 19%, cobalt 13%, molybdenum 4%, titanium 3%, aluminum 1.4% that is available under the trade name Waspaloy™, also available from Special Metals Corporation of New Hartford, New York, USA). The abradable material 308 may be different than the material of the remainder of the BOAS 208 to allow abrasion in response to contact with the tip 212 of the rotor blade 200.

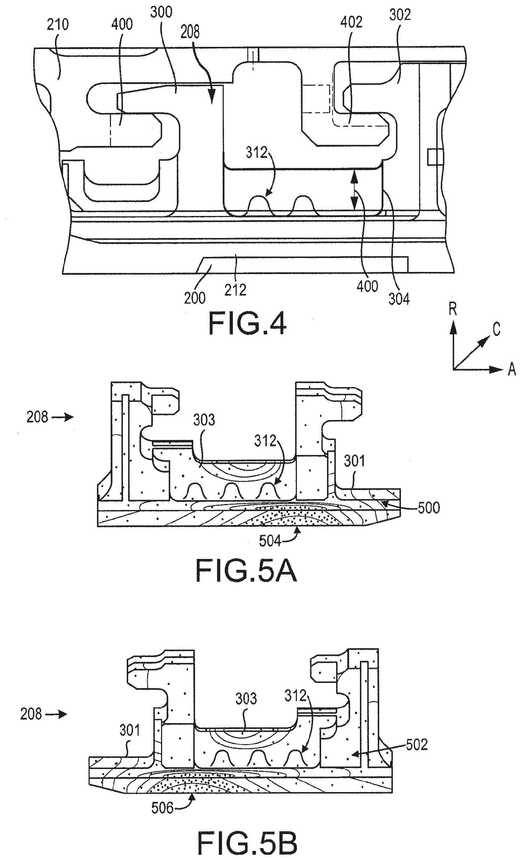

Referring now to FIGS. 5A and 5B, thermal dissipation diagrams of a blade arrival edge 500 and a blade departure edge 502, respectively, of the BOAS 208 are shown. The blade arrival edge 500 corresponds to an edge of the BOAS 208 at which the tip 212 of the rotor blade 200 of FIG. 2 first initiates contact, and the blade departure edge 502 corresponds to an edge of the BOAS 208 at which the tip 212 of the rotor blade 200 of FIG. 2 contacts immediately prior to lacking contact with the BOAS 208 in response to rotation of the rotor blade 200. As shown on the blade arrival edge 500 and the blade departure edge 502, the ribs 303 and the warts 312 assist in heat dissipation from the outer surface 301 of the BOAS 208. The dots in FIGS. 5A and 5B represent dispersed heat, such that a location with a greater density of dots experiences greater heat than an area with a lesser density of dots. The lines represent dispersion of heat throughout the parts.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the inventions. The scope of the invention is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A blade outer air seal (BOAS) (208), comprising:
an inner surface (216) configured to contact a core airflow (C) of a gas turbine engine (20) having an axis (X-X');
an outer surface (301);
at least one rib (303) extending in an axial direction along the outer surface (301); and
a plurality of warts (312) extending outward from the outer surface (301);
wherein the at least one rib (303) includes two ribs spaced apart in a circumferential direction; the plurality of warts (312) includes a first plurality of warts (314) located circumferentially between a first rib (304) of the two ribs and a second rib (306) of the two ribs, and a second plurality of warts (316) and a third plurality of warts (318) each located circumferentially outward from the two ribs; and **characterised in that** each of the plurality of warts (312) has a conical portion (320) and a spherical portion (322) located radially outward from the conical portion (320).

2. The BOAS (208) of claim 1, wherein the at least one rib (303) has a height in a radial direction that is at least twice as large as a width of the at least one rib (303) in a circumferential direction.

3. The BOAS of claim of claim 1 or 2, further comprising an abradable material (308) coupled to the inner surface (216) and configured to be abraded by a tip of a rotor blade (200)

4. The BOAS (208) of any preceding claim, wherein the at least one rib (303) provides increased surface area to more efficiently dissipate heat from the outer surface (301) through convection.

5. The BOAS (208) of any preceding claim, wherein the at least one rib (303) has a height in a radial direction that is at least 2.54 mm.

6. A compressor section (24) or a turbine section (28) of a gas turbine engine (20) having an axis (X-X'), the compressor section (24) or the turbine section (28) comprising:
a rotor blade (200) configured to rotate about the axis (X-X') and having a tip; and
the blade outer air seal (BOAS) (208) of any preceding claim,
wherein the inner surface (216) is configured to form a seal with the tip of the rotor blade (200).

7. The BOAS (208) of any of claims 1 to 5 or the compressor section (24) or the turbine section (28) of claim 6, wherein:
the BOAS (208) further includes a first hook (300) and a second hook (302) each extending radially outward from the outer surface (301) and configured to attach the BOAS (208) to a shroud block (210) ; and
the at least one rib (303) extends from the first hook to the second hook.

## Patentansprüche

1. Äußere Laufschaufelluftdichtung (blade outer air seal - BOAS) (208), umfassend:
eine Innenfläche (216), die so konfiguriert ist, dass sie in Kontakt mit einem Kernluftstrom (C) eines Gasturbinentriebwerks (20), das eine Achse (X-X') aufweist, steht;
eine Außenfläche (301);
mindestens eine Rippe (303), die sich in einer axialen Richtung entlang der Außenfläche (301) erstreckt; und
eine Vielzahl von Warzen (312), die sich von der Außenfläche (301) aus nach außen erstrecken;
wobei die mindestens eine Rippe (303) zwei Rippen beinhaltet, die in einer Umfangsrichtung beabstandet sind;
wobei die Vielzahl von Warzen (312) eine erste Vielzahl von Warzen (314), die in Umfangsrichtung zwischen einer ersten Rippe (304) der zwei Rippen und einer zweiten Rippe (306) der zwei Rippen angeordnet ist, und eine zweite Vielzahl von Warzen (316) und eine dritte Vielzahl von Warzen (318) beinhaltet, die jeweils in Umfangsrichtung auswärts der zwei Rippen angeordnet sind; und **dadurch gekennzeichnet, dass**
jede aus der Vielzahl von Warzen (312) einen konischen Abschnitt (320) und einen kugelförmigen Abschnitt (322), der radial auswärts des konischen Abschnitts (320) angeordnet ist, beinhaltet.

2. BOAS (208) nach Anspruch 1, wobei die mindestens eine Rippe (303) eine Höhe in einer radialen Richtung aufweist, die mindestens doppelt so groß ist wie eine Breite der mindestens einen Rippe (303) in einer Umfangsrichtung.

3. BOAS nach Anspruch nach Anspruch 1 oder 2, ferner ein abreibbares Material (308) umfassend, das an die Innenfläche (216) gekoppelt ist und so konfiguriert ist, dass es von einer Spitze einer Rotorlaufschaufel (200) abgerieben wird

4. BOAS (208) nach einem der vorstehenden Ansprüche, wobei die mindestens eine Rippe (303) einen vergrößerten Oberflächenbereich bereitstellt, um Wärme von der Außenfläche (301) durch Konvektion effizienter abzuleiten.

5. BOAS (208) nach einem der vorstehenden Ansprüche, wobei die mindestens eine Rippe (303) eine Höhe in einer radialen Richtung aufweist, die mindestens 2,54 mm beträgt.

6. Verdichterabschnitt (24) oder Turbinenabschnitt (28) eines Gasturbinentriebwerks (20), das eine Achse (X-X') aufweist, wobei der Verdichterabschnitt (24) oder der Turbinenabschnitt (28) Folgendes umfasst:
eine Rotorlaufschaufel (200), die so konfiguriert ist, dass sie sich um die Achse (X-X') dreht, und die eine Spitze aufweist;
und
die äußere Laufschaufelluftdichtung (BOAS) (208) nach einem der vorstehenden Ansprüche,
wobei die Innenfläche (216) so konfiguriert ist, dass sie mit der Spitze der Rotorlaufschaufel (200) eine Dichtung bildet.

7. BOAS (208) nach einem der Ansprüche 1 bis 5 oder Verdichterabschnitt (24) oder Turbinenabschnitt (28) nach Anspruch 6, wobei:
die BOAS (208) ferner einen ersten Haken (300) und einen zweiten Haken (302) beinhaltet, die sich jeweils radial nach außen von der Außenfläche (301) erstrecken und so konfiguriert sind, dass sie die BOAS (208) an einem Mantelblock (210) befestigen; und sich die mindestens eine Rippe (303) von dem ersten Haken zum zweiten Haken erstreckt.

## Revendications

1. Joint d'étanchéité à l'air extérieur de pale (BOAS) (208), comprenant :
une surface intérieure (216) configurée pour entrer en contact avec un flux d'air central (C) d'un moteur à turbine à gaz (20) ayant un axe (X-X') ;
une surface extérieure (301) ;
au moins une nervure (303) s'étendant dans une direction axiale le long de la surface extérieure (301) ; et
une pluralité de protubérances (312) s'étendant vers l'extérieur depuis la surface extérieure (301) ;
dans lequel l'au moins une nervure (303) comporte deux nervures espacées dans une direction circonférentielle ;
la pluralité de protubérances (312) comporte une première pluralité de protubérances (314) situées de manière circonférentielle entre une première nervure (304) des deux nervures et une seconde nervure (306) des deux nervures, et une deuxième pluralité de protubérances (316) et une troisième pluralité de protubérances (318) situées chacune de manière circonférentielle vers l'extérieur à partir des deux nervures ;
et **caractérisé en ce que**
chacune de la pluralité de protubérances (312) a une partie conique (320) et une partie sphérique (322) située radialement vers l'extérieur depuis la partie conique (320).

2. BOAS (208) selon la revendication 1, dans lequel l'au moins une nervure (303) a une hauteur dans une direction radiale qui est au moins deux fois plus grande qu'une largeur de l'au moins une nervure (303) dans une direction circonférentielle.

3. BOAS selon la revendication selon la revendication 1 ou 2, comprenant en outre un matériau abradable (308) couplé à la surface intérieure (216) et configuré pour être abrasé par une pointe d'une pale de rotor (200)

4. BOAS (208) selon une quelconque revendication précédente, dans lequel l'au moins une nervure (303) fournit une surface accrue pour dissiper plus efficacement la chaleur de la surface extérieure (301) par convection.

5. BOAS (208) selon une quelconque revendication précédente, dans lequel l'au moins une nervure (303) a une hauteur dans une direction radiale qui est d'au moins 2,54 mm.

6. Section de compresseur (24) ou section de turbine (28) d'un moteur à turbine à gaz (20) ayant un axe (X-X'), la section de compresseur (24) ou la section de turbine (28) comprenant :
une pale de rotor (200) configurée pour tourner autour de l'axe (X-X') et ayant une pointe ; et
le joint d'étanchéité à l'air extérieur de pale (BOAS) (208) selon une quelconque revendication précédente,
dans laquelle la surface intérieure (216) est configurée pour former un joint d'étanchéité avec la pointe de la pale de rotor (200) .

7. BOAS (208) selon l'une quelconque des revendications 1 à 5 ou section de compresseur (24) ou section de turbine (28) selon la revendication 6, dans lequel/dans laquelle :
le BOAS (208) comporte en outre un premier crochet (300) et un second crochet (302) s'étendant chacun radialement vers l'extérieur depuis la surface extérieure (301) et configurés pour fixer le BOAS (208) à un bloc d'enveloppe (210) ; et
l'au moins une nervure (303) s'étend depuis le premier crochet vers le second crochet.
